# EUROPEAN PATENT SPECIFICATION

(11) **EP 4 183 599 B1**
(45) Date of publication and mention of the grant of the patent: **26.03.2025**
(21) Application number: 22217023.5
(22) Date of filing: 22.12.2021
(51) Int. Cl.: B60C 11/11, B60C 11/13, B60C 11/03, B60C 11/12

(54) **PNEUMATIC TIRE**
LUFTREIFEN
PNEUMATIQUE

(30) Priority: 28.12.2020 JP 2020219117; 28.12.2020 JP 2020219175; 28.12.2020 JP 2020219135
(43) Date of publication of application: 24.05.2023
(62) Divisional of application: 21217030.2
(73) Proprietor: TOYO TIRE CORPORATION, Itami-shi, Hyogo 6640847 (JP)
(72) Inventor: KOBAYASHI, Yuki, Hyogo (JP); SATOI, Aya, Hyogo (JP)
(74) Representative: Balder IP Law, S.L.

(56) References cited:
- EP-A1- 3 560 732
- EP-B1- 2 664 464
- US-B2- 8 991 449

## Description

### TECHNICAL FIELD

The present invention relates to a pneumatic tire, and in particular to a pneumatic tire having a tread on which a plurality of blocks are placed along a tire circumferential direction.

### BACKGROUND

In the related art, there is known a pneumatic tire having a tread on which a plurality of center blocks, a plurality of shoulder blocks, and a plurality of mediate blocks are placed along a tire circumferential direction (for example, refer to US 8 991 449 B2 or to JP 6438768 B). On the tread of the tire of JP 6438768 B, there are formed a plurality of oblique grooves which are inclined with respect to a tire width direction. The tire of JP 6438768 B is called a directional tire in which a tire primary rotational direction is designated. In addition, in the pneumatic tire of JP 6438768 B, with an end edge of a block and a sipe formed on the block, an edge advantage is realized on snow/icy road surfaces.

The pneumatic tire of JP 6438768 B attempts to realize both wet performance and dry performance by controlling a width, a cross sectional area, or the like of the groove. However, for example, when the cross sectional area of the groove is increased, the dry performance is degraded, and, when the cross sectional area of the groove is reduced, the wet performance is degraded. Thus, it is difficult to sufficiently improve both performances. Further, for the tires of the related art including the tire of JP 6438768 B, there still remains room for improvement in handling performance during steady travel on a wet road surface and a dry road surface.

### SUMMARY

An object of the present invention is to improve on at least one of braking performance or handling performance on a wet road surface and a dry road surface.

According to one aspect of the present invention, there is provided a pneumatic tire comprising a tread. The tread includes an oblique groove extending from a side of a ground-contacting end toward a side of an equator, and a block formed along the oblique groove and alternately placed with the oblique groove in a tire circumferential direction. The block has a first sipe extending along the oblique groove in a shoulder zone positioned on the side of the ground-contacting end. A first incision is formed in the shoulder zone, along an edge of the first sipe.

According to another aspect of the present invention, there is provided a pneumatic tire comprising a tread. The tread includes an oblique groove extending from a side of a ground-contacting end toward a side of an equator, a block formed along the oblique groove and alternately placed with the oblique groove in a tire circumferential direction, and a plurality of circumferential grooves which partition the block into a shoulder zone positioned on the side of the ground-contacting end, a center zone positioned on the side of the equator, and an intermediate zone positioned between the shoulder zone and the center zone. A ground-contacting area of the intermediate zone is greater than or equal to a ground-contacting area of the shoulder zone.

A pneumatic tire according to the present invention is superior in at least one of braking performance or handling performance on a wet road surface and a dry road surface. The pneumatic tire according to the present invention is suitable for an all-season tire.

### BRIEF DESCRIPTION OF DRAWINGS

FIG. 1 is a perspective diagram of a pneumatic tire according to an embodiment of the present invention;
FIG. 2 is a plan view of the pneumatic tire according to the embodiment, showing a part of a tread;
FIG. 3 is a plan view schematically showing a part of a tread;
FIG. 4 is a perspective diagram enlarging a left portion in a tread width direction;
FIG. 5 is a perspective diagram showing a block group formed from a center block, a mediate block, and a shoulder block;
FIG. 6 is a diagram showing a cross section along a line AA of FIG. 5; and
FIG. 7 is a plan view enlarging a left portion in a tread width direction.

### DESCRIPTION OF EMBODIMENTS

A pneumatic tire according to an embodiment of the present invention will now be described in detail with reference to the drawings. The embodiment described below is merely exemplary, and the present invention is not limited to the embodiment. In addition, selective combination of elements of a plurality of embodiments and alternative configurations described below is contemplated in the present invention as claimed.

In the present disclosure, terms will be used which include a wet road surface, a snow road surface, and a dry road surface. The wet road surface refers to a road surface wetted by rainwater and a road surface wetted by melted snow and melted ice. The snow roar surface refers to a road surface covered with snow. The dry road surface refers to a road surface having no snow or ice, and which is dry. In the following, for the purpose of explanation, the wet road surface and the snow road surface may also be collectively referred to as a "snow/icy road surface". In addition, in the following, traveling performance on a frozen road surface (ice performance) will not be particularly described, but the pneumatic tire of the embodiment of the present invention has superior ice performance, in addition to superior wet performance, superior snow performance, and superior dry performance.

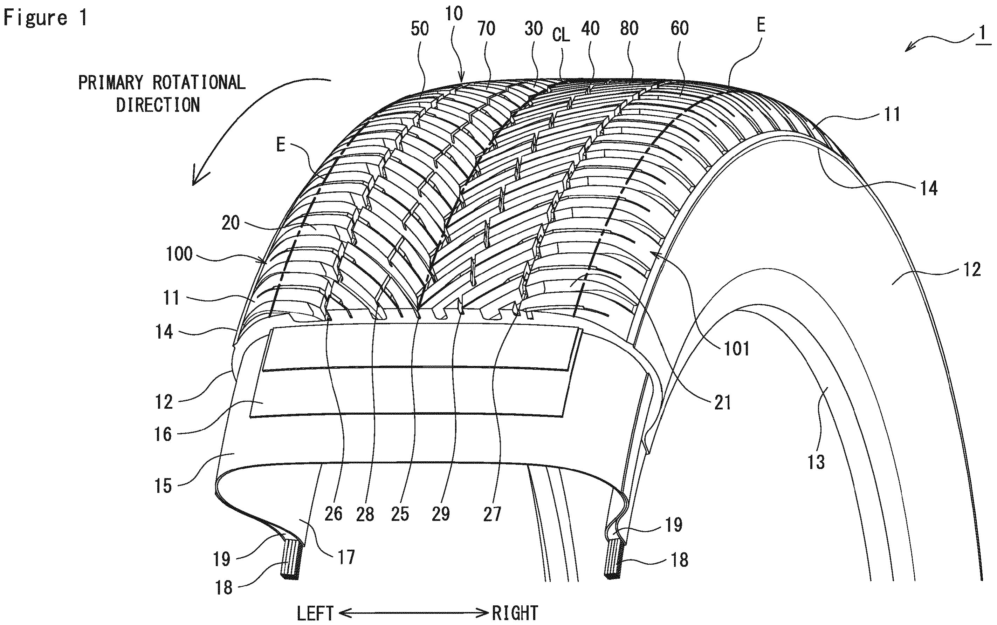

FIG. 1 is a perspective diagram of a pneumatic tire 1 according to an embodiment of the present invention, and also shows an internal structure of the tire. As shown in FIG. 1, the pneumatic tire 1 has a tread 10 which is a portion which contacts a road surface. The tread 10 has a tread pattern including a plurality of blocks, and is formed in an annular shape along a tire circumferential direction. Further, the tread 10 has a plurality of oblique grooves 20 and 21 inclined with respect to a tire width direction so that the grooves are gradually positioned closer to a rearward position in a tire primary rotational direction from a center portion in the tire width direction toward respective sides in the tire width direction. The pneumatic tire 1 is a directional tire in which a primary rotational direction is designated. The oblique grooves 20 and 21 are formed between blocks adjacent to each other in the tire circumferential direction, and the oblique grooves 20 and 21 partition block groups 100 and 101, which will be described below.

In the present disclosure, the "tire primary rotational direction" refers to a rotational direction when a vehicle on which the pneumatic tire 1 is equipped moves forward. In addition, in the present disclosure, for the pneumatic tire 1 and the constituting elements thereof, the terms "left" and "right" are used for the purpose of explanation. A "right side" of the pneumatic tire 1 refers to a right side when the pneumatic tire 1 in a state of being equipped on the vehicle is viewed from a front side of the vehicle, and a "left side" refers to a left side when the pneumatic tire 1 in the state of being equipped on the vehicle is viewed from the front side of the vehicle. In the figures, arrows for showing the tire primary rotational direction and the left and right sides are illustrated.

The tread 10 has, in addition to the plurality of oblique grooves 20 and 21, a plurality of circumferential grooves extending in the tire circumferential direction. The plurality of circumferential grooves include a first circumferential groove 25 formed at a center portion in the width direction of the tread 10, and second circumferential grooves 26 and 27 formed respectively on left and right sides of the tread 10. In addition, a third circumferential groove 28 is formed between the first circumferential groove 25 and the second circumferential groove 26, and a third circumferential groove 29 is formed between the first circumferential groove 25 and the second circumferential groove 27. The "tire width direction" and the "tread width direction (width direction of tread 10)" are the same direction, and both terms will be used as suited in the following description.

The tread 10 has a plurality of blocks which are partitioned by the plurality of oblique grooves 20 and 21 and the plurality of circumferential grooves. The block is an island-shape land portion protruding toward an outer side in a tire radial direction. The tread 10 includes, as the blocks, a plurality of center blocks 30 and 40, a plurality of shoulder blocks 50 and 60, and a plurality of mediate blocks 70 and 80. The center block 30, the shoulder block 50, and the mediate block 70 are placed at the left side in the width direction of the tread 10, and the center block 40, the shoulder block 60, and the mediate block 80 are placed at the right side in the width direction of the tread 10.

In the present embodiment, blocks of the same type and assigned the same reference numeral are arranged in a line along the tire circumferential direction. In addition, the lines of blocks along the tire circumferential direction are formed from the same number of blocks. That is, the tread 10 includes the same number of the center blocks 30 and 40, the shoulder blocks 50 and 60, and the mediate blocks 70 and 80.

**At a center** portion in the width direction of the tread 10, the center blocks 30 and 40 are placed to sandwich a tire equator CL from the left and the right. The "tire equator CL" refers to a line along the tire circumferential direction and passing through a center in the tire width direction. The center blocks 30 and 40 are separated by the first circumferential groove 25, and are placed in a staggered manner along the tire circumferential direction (tire equator CL). Parts of the center blocks 30 and 40 is positioned on the tire equator CL, and are placed overlapping in the tire circumferential direction.

At a left portion in the width direction of the tread 10, the center block 30, the mediate block 70, and the shoulder block 50 are placed in a continuous manner in this order from the side of the tire equator CL, forming one block group 100. At a right portion in the width direction of the tread 10, the center block 40, the mediate block 80, and the shoulder block 60 are placed in a continuous manner in this order from the side of the tire equator CL, forming one block group 101. The three blocks of the block group 100 are arranged in a direction of extension of the oblique groove 20, and the three blocks of the block group 101 are arranged in a direction of extension of the oblique groove 21.

As will be described later in detail, the tread 10 has a tread pattern with a large ground-contacting areas (A3) for the mediate blocks 70 and 80, and satisfying a condition of the ground-contacting areas (A3) ≥ ground-contacting areas (A2) of the shoulder blocks 50 and 60. The pneumatic tire 1 realizes a high gripping force with respect to the snow/icy road surface by the plurality of blocks, and, in particular with the large ground-contacting area (A3), realizes superior maneuver stability on both the snow/icy road surface and the dry road surface. In addition, on each block, a sipe is formed, which improves an edge advantage with respect to the snow/icy road surface. The pneumatic tire 1 having such a tread pattern is suitable, for example, for an all-season tire.

The pneumatic tire 1 has a shoulder 11, a side wall 12, and a bead 13 formed in an annular shape along the tire circumferential direction, similar to the tread 10. The shoulder 11, the side wall 12, and the bead 13 are portions forming the side surface of the pneumatic tire 1, and are provided on both left side and the right side of the pneumatic tire 1. In the present embodiment, a ground-contacting end E of the pneumatic tire 1 is a boundary position between the tread 10 and the shoulder 11. In addition, an annular side rib 14 formed on the side surface of the pneumatic tire 1 is a boundary position between the shoulder 11 and the side wall 12.

In the present invention, the ground-contacting ends E refer to respective ends, in the tire width direction, of a portion contacting a flat road surface when a load which is 80% of a regular load (maximum load capability) at a regular internal pressure is applied in a state in which the pneumatic tire 1 which is yet to be used is equipped on a regular rim and is filled with air to achieve the regular internal pressure. Similarly, the ground-contacting area of each block of the pneumatic tire 1 refers to an area of the portion contacting the flat road surface under application of the load which is 80% of the maximum load capability at the regular internal pressure.

The "regular rim" refers to a rim determined by a tire standard, and is a "standard rim" in JATMA, a "Design Rim" in TRA, and a "Measuring Rim" in ETRTO. The "regular internal pressure" is a "maximum pneumatic pressure" in JATMA, a maximum value described in the table, "TIRE LOAD LIMITS AT VARIOUS COLD INFLATION PRESSURES" in TRA, and an "INFLATION PRESSURE" in ETRTO. The "regular load" is a "maximum load capability" in JATMA, a maximum value described in the table, "TIRE LOAD LIMITS AT VARIOUS COLD INFLATION PRESSURES" in TRA, and a "LOAD CAPACITY" in ETRTO.

The shoulder 11 protrudes from the ends in the width direction of the tread 10 toward an outer side in the tire width direction (direction away from the tire equator CL), and extends toward an inner side in the tire radial direction. The side wall 12 extends from the shoulder 11 toward an inner side in the radial direction, and is gradually curved to be convex toward the outer side. The bead 13 is a portion fixed to the rim of a wheel, and extends from the side wall 12 toward the inner side in the tire radial direction. The bead 13 is gradually curved to be convex toward the inner side, and is positioned at an inner side in the width direction of the pneumatic tire 1 (side of the tire equator CL) as compared with the side wall 12.

As described above, FIG. 1 shows the internal structure of the pneumatic tire 1. The pneumatic tire 1 has a carcass 15 which is a cord layer coated with rubber, and a belt 16 placed between the tread pattern and the carcass 15. The carcass 15 is formed from, for example, two carcass plies, and forms a tire skeleton for enduring load, shock, pneumatic pressure, or the like. The belt 16 is a reinforcement band stretched in the tire circumferential direction, and firmly tightens the carcass 15 to improve the rigidity of the tread 10. On an inner circumferential surface of the carcass 15, there is adhered an inner liner 17 which is a rubber layer for maintaining the pneumatic pressure. In addition, in the bead 13, a bead core 18 and a bead filler 19 are placed.

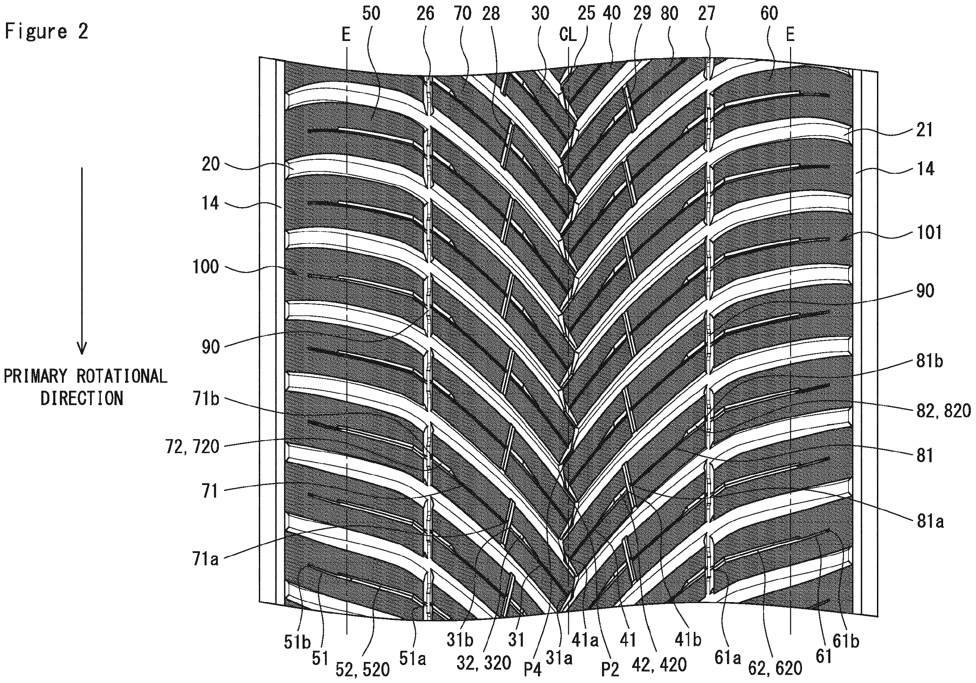

FIG. 2 is a plan view of the pneumatic tire 1, and shows a part of the tread 10. In FIG. 2 or the like, dot-hatching is applied to an upper surface of the block including the ground-contacting surface of the block. The ground-contacting surface of the block refers to a region, of an upper surface of each block facing an outer side in the tire radial direction, which contacts the road surface.

As shown in FIG. 2, the oblique grooves 20 are formed with an approximately equal spacing in the tire circumferential direction and in parallel to each other. Similarly, the oblique grooves 21 are formed in equal spacing in the tire circumferential direction, and in parallel to each other. The oblique grooves 20 and 21 are placed in a staggered manner along the tire circumferential direction. The block groups 100 and 101 partitioned by the oblique grooves 20 and 21 have a placement similar to that of the oblique grooves 20 and 21. The tread 10 has a tread pattern in which, at the left portion in the width direction, the oblique groove 20 and the block group 100 are alternately placed in the tire circumferential direction, and, at the right portion in the width direction, the oblique groove 21 and the block group 101 are alternately placed in the tire circumferential direction.

The oblique groove 20 and the block group 100 have a planar shape of being curved and convex toward a rearward side of the tire primary rotational direction. Similarly, the oblique groove 21 and the block group 101 have a planar shape of being curved and convex toward a rearward side of the tire primary rotational direction. The oblique grooves 20 and 21 and the block groups 100 and 101 are inclined in the same direction in the tire circumferential direction, and the inclination angle is larger on the side of the tire equator CL than on the side of the ground-contacting end E. The inclination angle of the oblique grooves 20 and 21 with respect to the tire width direction is, for example, 30° to 60°, or 40° to 50° on the side of the tire equator CL.

**In** the pneumatic tire 1, when the tire rotates such that the sides of the tire equator CL of the block groups 100 and 101 contact the ground before the sides of the ground-contacting ends E, water, snow, and ice can be efficiently discharged from the side of the tire equator CL of the tread 10 toward the side of the ground-contacting end E. In this configuration, superior wet performance and superior snow performance can be realized. On the other hand, when the tire rotates in an opposite direction, the degrees of the water drainage and snow removal advantages are not as much as those in the previous case. The pneumatic tire 1 thus is a directional tire, which is equipped on the vehicle in such a manner that the direction in which the sides of the tire equator CL of the block groups 100 and 101 contact the ground first is the primary rotational direction. On the side wall 12, for example, a display such as an arrow, a text, or the like is provided, which shows the tire primary rotational direction.

The tread pattern of the tread 10 is, for example, a pattern in which the block groups 100 and 101 are placed symmetrically to the left and right with a shift of a half pitch in the tire circumferential direction, with respect to a surface perpendicular to the rotational axis of the tire passing through the tire equator CL (hereinafter, also referred to as a "tire equator surface"). A shape of the block group 100 is identical to a shape in which the block group 101 is inverted with respect to the tire equator surface (this is similarly true for the oblique grooves 20 and 21). If the inverted block group 101 is slid in the tire circumferential direction, the block group 100 can be obtained. The tread pattern of the tread 10 has a superior left-and-right balance, and is effective in improving the maneuvering stability.

The oblique groove 20 is formed from a corner P4 of a right center block 40 which protrudes to the left side in the tire width direction beyond the tire equator CL, passing the ground-contacting end E at the left, and to the side rib 14 at the left. The oblique groove 20 intersects the first circumferential groove 25 at the corner P4 of the center block 40. In the present embodiment, a configuration is described in which the first circumferential groove 25 is formed in a zig-zag shape continuously in the tire circumferential direction. The oblique groove 20 gradually becomes aligned with the tire width direction from the side of the tire equator CL toward the ground-contacting end E, and the inclination with respect to the tire width direction becomes more gradual.

A width of the oblique groove 20 (a length in a direction orthogonal to a direction of extension of the oblique groove 20) may be constant over the entire length. However, in the present embodiment, the width of the oblique groove 20 becomes larger on the side of the ground-contacting end E in comparison with the side of the tire equator CL, and is the maximum at or near an intersection with the second circumferential groove 26. In this configuration, the water drainage and snow removal performances are improved, and a snow pillar shearing force for gripping and packing the snow is improved, resulting in superior wet performance and superior snow performance. In the pneumatic tire 1, the oblique groove 20 having a wider width in comparison to a summer tire is formed, and a ratio in the length of the oblique groove 20 along the tire circumferential direction and the ground-contacting surface of each block is set to, for example, 3:7 to 4:6.

Similarly, the oblique groove 21 is formed from a corner P2 of a left center block 30 protruding to the right side in the tire width direction beyond the tire equator CL, passing the ground-contacting end E at the right, to the side rib 14 at the right. The oblique groove 21 intersects the first circumferential groove 25 at the corner P2 of the center block 30. The oblique groove 21 gradually becomes aligned with the tire width direction from the side of the tire equator CL toward the ground-contacting end E, and the inclination with respect to the tire width direction becomes more gradual. A width of the oblique groove 21 is larger on the side of the ground-contacting end E than on the side of the tire equator CL, and is the maximum at or near the intersection with the second circumferential groove 27.

As described above, the tread has a plurality of oblique grooves 20 and 21, and a plurality of blocks. The oblique grooves 20 and 21 extend from the side of the ground-contacting end E toward the side of the equator Cl, and have a larger inclination with respect to the tire width direction on the side of the equator CL than on the side of the ground-contacting end E. The first oblique groove 20 extends from the ground-contacting end E at the left toward the side of the equator CL, and the second oblique groove 21 extends from the ground-contacting end E at the right toward the side of the equator CL. The blocks are formed along the oblique grooves 20 and 21, and are alternately placed with the oblique grooves 20 and 21 in the tire circumferential direction. In the present embodiment, the block group 100 is formed along the oblique groove 20, and the block group 101 is formed along the oblique groove 21. Alternatively, each block group may be one block having no circumferential groove.

The tread 10 has a plurality of circumferential grooves which respectively partition the blocks into the center blocks 30 and 40 which are a center zone, shoulder blocks 50 and 60 which are a shoulder zone, and mediate blocks 70 and 80 which are an intermediate zone. The center zone of the block refers to a portion, among the blocks, positioned on the side of the equator CL. The shoulder zone refers to a portion positioned on the side of the ground-contacting end E of the block, and the intermediate zone refers to a portion positioned between the center zone and the shoulder zone. When the circumferential groove for partitioning the zones is not formed in the block, for example, a portion where an outer shape of the block changes, such as a bent portion of the block, may be set as a boundary position for the zones. Alternatively, a region of the tread 10 from the equator CL to the ground-contacting end E may be equally divided in the width direction into 3 segments, and these segments may be defined, in the order from the side of the equator CL, as the center zone, the intermediate zone, and the shoulder zone.

Each circumferential groove is a groove having a narrower width than the oblique grooves 20 and 21, intersects the oblique groove 20 or the oblique groove 21, and partitions a line of blocks arranged along the tire circumferential direction. The first circumferential groove 25 which separates the lines of the center blocks 30 and 40 is bent at the intersection with the oblique grooves 20 and 21; that is, at the corners P2 and P4 of the center blocks 30 and 40, in directions opposite from each other, and is formed in a zig-zag shape extending in the tire circumferential direction while intersecting the tire equator CL.

The second circumferential grooves 26 and 27 are formed without being bent at the intersections with the oblique grooves 20 and 21, and in a straight line shape along the tire circumferential direction. By forming the second circumferential grooves 26 and 27, positioned closest to the ground-contacting end E among the circumferential grooves, in a straight line shape, superior water drainage performance can be obtained. The second circumferential groove 26 separates the line of the shoulder blocks 50 and the line of the mediate blocks 70, and the second circumferential groove 27 separates the line of the shoulder blocks 60 and the line of the mediate blocks 80. In addition, the second circumferential grooves 26 and 27 are formed in a wider width than the other circumferential grooves, and are formed in a same depth as the oblique grooves 20 and 21 at portions where there is no protrusion 90 to be described later.

In the second circumferential grooves 26 and 27, the protrusion 90 is provided having a lower height than each block. The protrusion 90 protrudes toward the outer side in the tire radial direction similar to the blocks, and is formed to connect lower parts of two blocks, between the shoulder block 50 and the mediate block 70, and between the shoulder block 60 and the mediate block 80. The protrusion 90 improves, for example, the rigidity of the block, and contributes to improvement of the dry performance, as will be described later in detail.

The third circumferential groove 28 separates the center block 30 and the mediate block 70, and is formed to connect two oblique grooves 20. Similarly, the third circumferential groove 29 separates the center block 40 and the mediate block 80, and is formed to connect two oblique grooves 21. Further, the third circumferential grooves 28 and 29 are inclined with respect to the tire circumferential direction so that the groove gradually becomes closer to the tire equator CL from the frontward side in the tire primary rotational direction toward the rearward side. The third circumferential grooves 28 and 29 may be described as short grooves across the block groups 100 and 101, and a plurality of the third circumferential grooves are formed, arranged in the tire circumferential direction. In addition, the third circumferential grooves 28 and 29 are formed to be shallower than the oblique grooves 20 and 21.

On each block, as described above, a sipe of a narrow line shape is formed. One sipe is formed on each block, each sipe extending in a direction along the oblique groove 20 or the oblique groove 21. The sipe is a narrow line-shape groove having a narrower width than the oblique grooves 20 and 21 and the circumferential grooves, and improves an edge advantage to scrape snow and ice, and realizes superior braking/driving capability and maneuvering stability on the snow/icy road surface. A width of the sipe is, for example, less than or equal to 30% or less than or equal to 20% of the widths of the third circumferential grooves 28 and 29, at a portion where there is no inclined surface to be described later. In the present disclosure, a sipe is defined as a groove having a groove width of less than or equal to 1.0 mm.

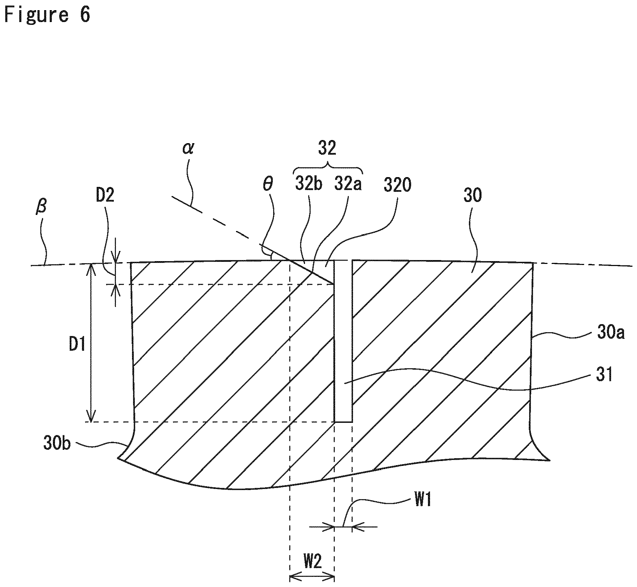

Sipes 31 and 41 of the center blocks 30 and 40, and sipes 71 and 81 of the mediate blocks 70 and 80 are formed over entire lengths in the longitudinal directions of the ground-contacting surfaces of respective blocks. Sipes 51 and 61 of the shoulder blocks 50 and 60 are formed from ends positioned at an inner side in the tire width direction of respectively blocks, and in lengths extending beyond the ground-contacting end E. On each block, an incision is formed along an edge of the sipe. An inclined surface forming the incision is inclined with a predetermined angle θ (refer to FIG. 6 to be described later) with respect to the ground-contacting surface of the block. The inclined surface is formed along a length direction in which the sipe extends, and in a predetermined depth from the ground-contacting surface of the block. The predetermined depth is, for example, less than or equal to 30% of the depth of the sipe.

An incision 520 formed along the sipe 51 of the shoulder block 50 has functions to effectively distribute a ground-contacting pressure of the block to increase a frictional force with respect to the road surface, and to improve a gripping force, while assuring the rigidity of the shoulder block 50. In addition, the incision 520 cuts and widens an edge of the sipe 51 to improve the water drainage capability, and enlarges the snow pocket for biting the snow. The incision 520 improves the braking performance on the snow/icy road surface and the dry road surface, and contributes to improvement of the wet performance, the snow performance, and the dry performance. An incision 620 formed along the sipe 61 of the shoulder block 60 realizes functions similar to those of the incision 520.

An incision 320 formed along the sipe 31 of the center block 30 contributes to the distribution of the ground-contacting pressure similar to the incision 520, and in particular improves the function of the block to grip on the snow, and improves the traction performance on the snow road surface. Further, the incision 320 improves the water drainage capability. An incision 420 formed along the sipe 41 of the center block 40, and incisions 720 and 820 formed along the sipes 71 and 81 of the mediate blocks 70 and 80 realize functions similar to those of the incision 320, for example.

The incision has a shape in which, at the edge of the sipe, a corner of the block is chamfered, and the edge of the sipe is cut and widened. The tread pattern including the incision is formed using a mold on which a pattern corresponding to the incision or the like is formed. Further, a length, a width, or the like of an inclined surface formed by the chamfering of the corner of the block are identical to a length, a width, or the like of the incision. For example, the width of the inclined surface may alternatively be read to be the width of the incision.

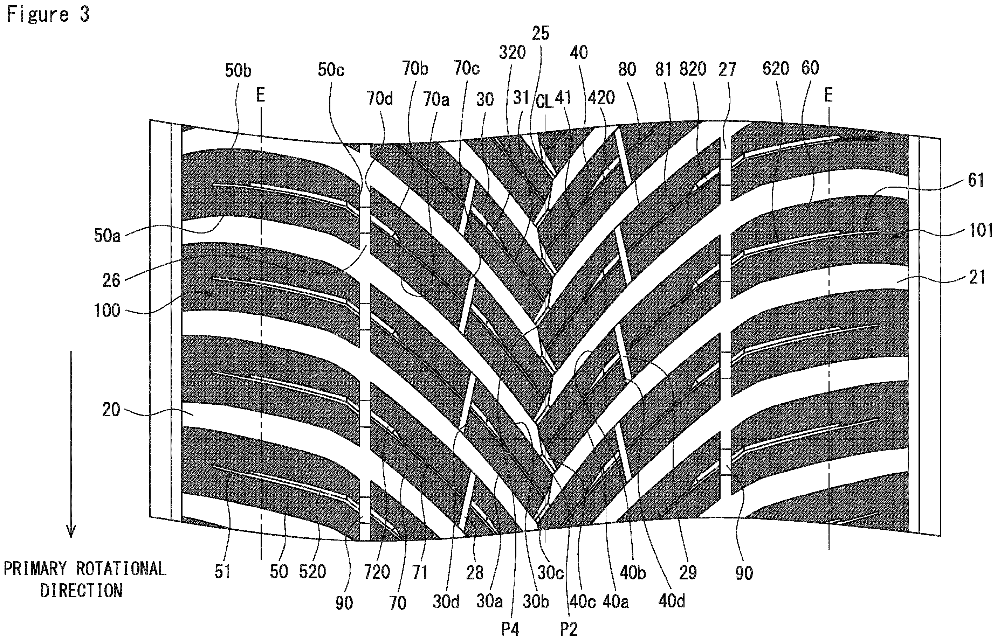

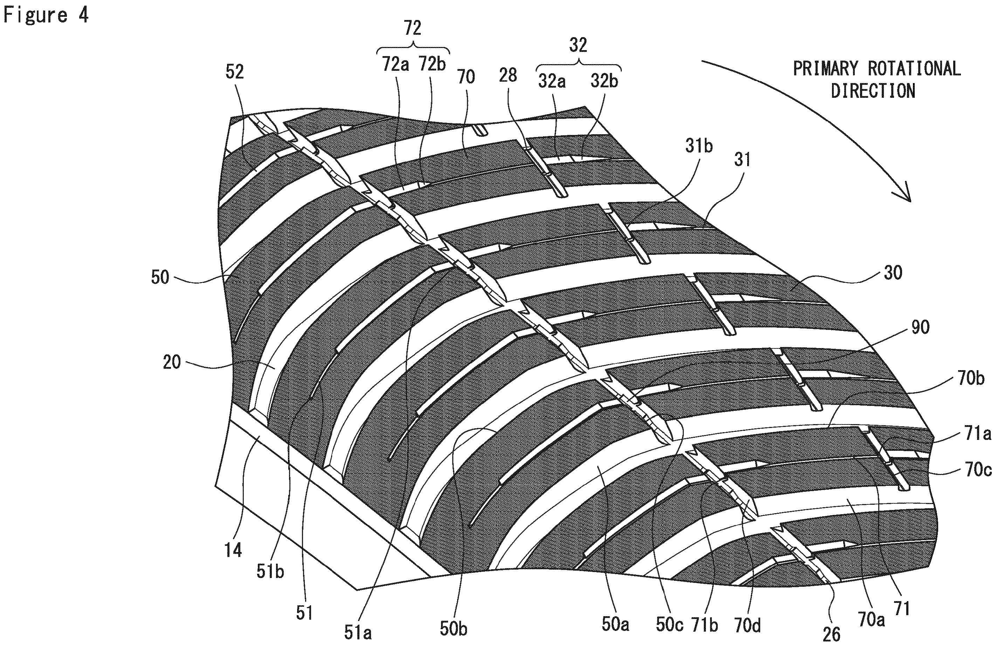

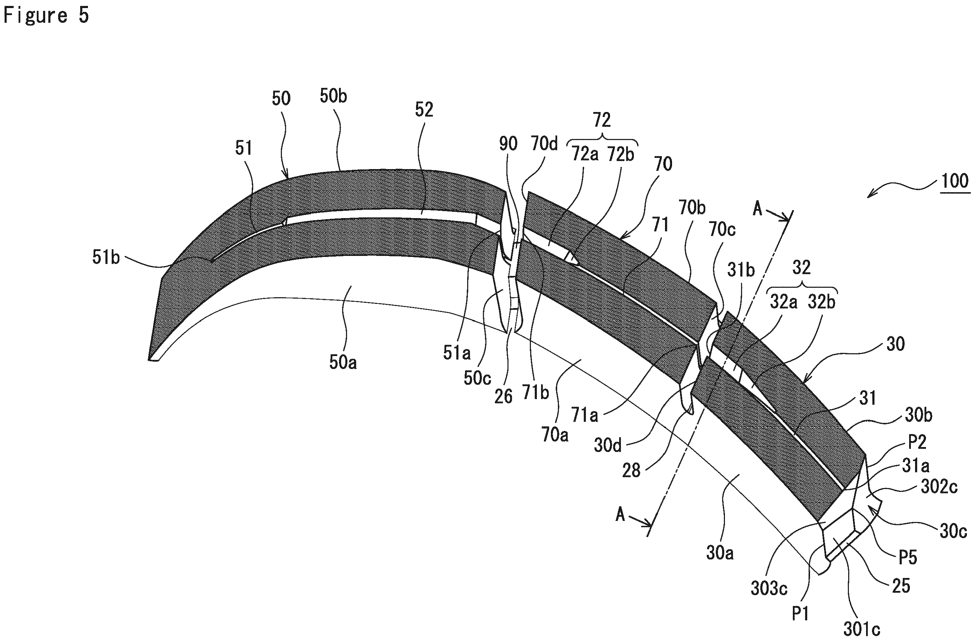

The structure of each block will now be described with reference to FIGs. 2 to 4, while exemplifying three blocks of the block group 100. FIG. 3 is a plan view schematically showing the tread 10. FIG. 4 is a perspective diagram enlarging the left portion in the width direction of the tread 10. In addition, in the following description, FIGs. 5 and 6 are also referred to as suited. FIG. 5 is a diagram showing the block group 100. FIG. 6 is a cross sectional diagram along a line AA of FIG. 5.

### [Center Block]

As shown in FIGs. 2 to 4, the center blocks 30 and 40 are island-shape protrusions formed at the center portion of the tread 10 in the tire width direction. The center blocks 30 and 40 have an approximately rectangular shape in a plan view, elongated in the direction of extension of the oblique grooves 20 and 21, and the longitudinal direction of each block is inclined with respect to the tire width direction. The center blocks 30 and 40 are placed to sandwich the tire equator CL from the left and the right. A part of the left center block 30 protrudes to the right side beyond the tire equator CL, and a part of the right center block 40 protrudes to the left side beyond the tire equator CL.

The center block 30 has side walls 30a and 30b formed along the oblique groove 20, a side wall 30c formed at a first end in the longitudinal direction of the block, and a side wall 30d formed at a second end in the longitudinal direction of the block (refer to FIG. 3). Similarly, the center block 40 has side walls 40a and 40b formed along the oblique groove 21, a side wall 40c formed at a first end in the longitudinal direction of the block, and a side wall 40d formed at a second end in the longitudinal direction of the block. The side walls 30a and 40a are positioned at the frontward side in the tire primary rotational direction of each block, and the side walls 30b and 40b are positioned at the rearward side in the tire primary rotational direction of each block. In other words, the side walls 30a and 40a are positioned at a leading side of each block, and the side walls 30b and 40b are positioned at a trailing side of each block.

In the present embodiment, the side walls 30b and 30c of the center block 30 and the side walls 40b and 40c of the center block 40 intersect the tire equator CL. On the other hand, the side walls 30a and 40a of the blocks are not placed over the tire equator CL, and do not intersect the tire equator CL. The side walls of the center blocks 30 and 40 are not formed in such a manner that the overall side walls are perpendicular to the ground-contacting surface of the block, and are curved such that a lower part of the side wall near a groove bottom, in particular, widens toward the outer side of the block (this is similarly true for other side walls of the other blocks). In the schematic diagram of FIG. 3, the blocks are shown in such a manner that the side walls of the blocks as a whole are perpendicular to the ground-contacting surface of the block.

The center blocks 30 and 40 are placed in such a manner that the side walls 30b and 40c oppose each other with the first circumferential groove 25 therebetween, and the side walls 30c and 40b oppose each other with the first circumferential groove 25 therebetween. With such a placement, a staggered pattern is realized in which the center blocks 30 and 40 are alternately arranged along the tire equator CL. In addition, the corner P2 positioned at a boundary of the side walls 30b and 30c of the center block 30 is positioned on an extended line of the side wall 40a of the center block 40, and the corner P4 positioned at a boundary of the side walls 40b and 40c is positioned on an extended line of the side wall 30a.

The side walls 30a and 30b of the center block 30 are formed to be gradually curved, and approximately parallel to each other. The side wall 30d is formed along the third circumferential groove 28, opposes a side wall 70c of the mediate block 70 with the third circumferential groove 28 therebetween, and is formed in an approximately straight line shape in the plan view. Similarly, the side walls 40a and 40b of the center block 40 are formed to be gradually curved, and approximately parallel to each other. The side wall 40d is formed along the third circumferential groove 29, opposes a side wall of the mediate block 80 with the third circumferential groove 29 therebetween, and is formed in an approximately straight line shape in the plan view.

As shown in FIG. 5, on the side wall 30c of the center block 30, three surfaces (a first surface 301c, a second surface 302c, and a third surface 303c) having different surface orientations from each other are formed, and these three surfaces intersect at an intersection P5. The first surface 301c opposes the side wall 40b of the center block 40 with the first circumferential groove 25 therebetween, and is formed from a corner P1 positioned at a boundary with the side wall 30a to a center portion in a short side direction of the center block 30. The second surface 302c is formed from the corner P2 to the center portion in the short side direction of the center block 30, and is connected to the first surface 301c.

The second surface 302c is formed to be gradually distanced away from the side wall 40b of the center block 40 toward the corner P2. With this configuration, the first circumferential groove 25 is gradually widened from the side of the tire equator CL toward the intersection with the oblique groove 20 (refer to FIG. 3). The third surface 303c is an inclined surface connecting the ground-contacting surface of the block and the first surface 301c and the second surface 302c, and is inclined at a predetermined angle with respect to the ground-contacting surface of the block, similar to an inclined surface 32 of the sipe 31. Similarly, on the side wall 40c of the center block 40, three surfaces having different surface orientations from each other are formed.

On the center block 30, one sipe 31 is formed along the direction of extension of the oblique groove 20. The sipe 31 is formed over an entire length of the ground-contacting surface in the longitudinal direction at the center portion in the short side direction, so as to bisect the ground-contacting surface of the center block 30. In addition, the sipe 31 is formed at the side wall 30d from the ground-contacting surface of the block to the groove bottom, or deeper than the groove bottom of the third circumferential groove 28, and a sipe end 31b is opened to the third circumferential groove 28. On the other hand, on the side wall 30c which intersects the tire equator CL, the sipe 31 is not formed, and the sipe end 31a is not opened to the first circumferential groove 25. In this configuration, while superior braking performance on the dry road surface is assured, the braking performance on the snow/icy road surface can be improved by the edge advantage and water drainage advantage of the sipe 31.

A ground-contacting area (A1) of the center block 30 is the smallest among the three blocks of the block group 100. In the present invention, the ground-contacting area of the block refers to an area of a portion contacting the road surface under the above-described condition, and includes an area of a portion in which the sipe is formed. When a sum of the ground-contacting areas of the three blocks of the block group 100 is 100%, the ground-contacting area (A1) of the center block 30 is, for example, 20% to 35%, and is desirably 25% to 33%. When a ratio of the ground-contacting area (A1) is within the above-described range, handling performance can be easily improved during steady travel such as a straight forward traveling with a velocity of less than or equal to 100 km per hour.

The incision 320 is formed along the edge of the sipe 31 on the center block 30. On a portion adjacent to the sipe 31, the inclined surface 32 is formed, which is inclined with a predetermined angle θ with respect to the ground-contacting surface of the center block 30 (refer to FIG. 6). As described above, the incision 320 improves the traction performance on the snow road surface and improves the water drainage capability while assuring the rigidity of the center block 30. The incision 320 and the inclined surface 32 are formed from the ground-contacting surface to a predetermined depth range (for example, a range of a depth of 2.0 mm). The inclination angle θ of the inclined surface 32 is, for example, 15° to 60°, or 20° to 50°, and is desirably 20° to 35° or 25° to 35°. With this configuration, the function of the incision 320 can be more effectively realized. In addition, during abrupt braking or abrupt acceleration, the inclined surface 32 contacts the road surface, and collapsing of the block is suppressed.

In the present disclosure, the inclination angle θ of the inclined surface 32 with respect to the ground-contacting surface of the center block 30 refers to an angle between the ground-contacting surface of the block (upper surface of the block) and a virtual surface α which is an extension of the inclined surface 32, as shown in FIG. 6. Alternatively, the inclination angle of the inclined surface 32 can also be described as an angle between a virtual surface β along the ground-contacting surface of the center block 30 and the inclined surface 32. This definition of the inclination angle of the inclined surface 32 is also similarly applied to the inclined surfaces of the other blocks.

The incision 320 and the inclined surface 32 may be formed, at the portions adjacent to the sipe 31, both along a first edge positioned at the frontward side in the tire primary rotational direction and along a second edge positioned at the rearward side in the tire primary rotational direction, but desirably, the incision 320 and the inclined surface 32 are formed to be larger on the portion adjacent to the second edge than on the portion adjacent to the first edge. In the present embodiment, the incision 320 and the inclined surface 32 are formed only along the second edge of the sipe 31 positioned at the rearward side in the tire primary rotational direction. By forming the incision 320 only along one edge, the advantage of the incision 320 and suppression of the reduction of the rigidity of the block can both be realized in a more advanced manner. In addition, when the incision 320 is formed along the second edge of the sipe 31, in comparison to the case in which the incision 320 is formed along the first edge, during abrupt braking or abrupt acceleration, the inclined surface 32 can more easily contact the road surface and the collapsing of the block can be more easily suppressed.

A second side wall of the sipe 31 adjacent to the incision 320 and the inclined surface 32 is in other words a side wall positioned at the trailing side, among the side walls of the sipe 31. Alternatively, when a portion positioned at the frontward side in the tire primary rotational direction of the center block 30 partitioned by the sipe 31 is a first portion and a portion positioned at the rearward side in the tire primary rotational direction is a second portion, the incision 320 and the inclined surface 32 may be described as being formed at a leading side end of the second portion. A first side wall of the sipe 31 opposing the second side wall is formed approximately perpendicular to the ground-contacting surface. Further, a corner of the block along the first edge of the sipe 31 is not chamfered.

The inclined surface 32 includes two regions (a first region 32a and a second region 32b) having different planar shapes for the surfaces (refer to FIG. 4). The first region 32a is a surface of an approximately rectangular shape in the plan view approximately parallel to the length direction of the sipe 31, and is formed in a length of 40% to 60% of the entire length of the inclined surface 32. On the other hand, the second region 32b is a surface of an approximately triangular shape in the plan view inclined more to the side of the sipe end 31b in comparison to the first region 32a, and has its area reduced toward the side of the sipe end 31a. By providing the second region 32b, a step formed at the end of the inclined surface 32 can be made gradual, and concentration of stress to the end of the inclined surface 32 can be suppressed.

As shown in FIG. 6, the incision 320 and the inclined surface 32 are desirably formed only near the ground-contacting surface of the block. While FIG. 6 shows a 2D sipe, the sipe may alternatively be a 3D sipe.

A depth D2 of the incision 320 and the inclined surface 32 is, for example, 10% to 30% of a depth D1 of the sipe 31 in the first region 32a, and is desirably 10% to 25% or 10% to 20% of the depth D1. Here, the depth of the sipe and the inclined surface refers to a length from the ground-contacting surface of the block, along a height direction (tire radial direction) of the block. When the depth D2 is within the above-described range, for example, the function of the incision 320 can more effectively be realized while assuring the rigidity of the block. An example of the depth D2 is 0.8 mm to 1.2 mm. In the present embodiment, the depth D1 of the sipe 31 is substantially identical to or deeper than a depth of the third circumferential groove 28. The depth D1 of the sipe 31 is desirably shallower than the depth of the oblique groove 20.

The incision 320 and the inclined surface 32 are formed, at the portion adjacent to the sipe 31, in a predetermined length range from the sipe end 31b positioned on the side of the mediate block 70. The predetermined length is desirably a length not reaching the sipe end 31a on the side of the tire equator CL, and the incision 320 and the inclined surface 32 are not formed near the sipe end 31a. As will be described later in detail, the incision 320 and the inclined surface 32 are formed, for example, in a length of 30% to 50% (length long the sipe 31) with respect to the length in the longitudinal direction of the ground-contacting surface of the center block 30. By controlling the length of the incision 320 in an appropriate range and accurately controlling a relationship with the lengths of the inclined surfaces of the other blocks, the wet performance, the snow performance, and the dry performance of the pneumatic tire 1 can be more effectively improved.

A width W2 of the incision 320 and the inclined surface 32 is, for example, 1.3 times to 3.5 times a width W1 of the sipe 31 in the first region 32a, and is desirably 1.5 times to 3 times or 2 times to 3 times the width W1 (refer to FIG. 6). Here, the width of the incision and the inclined surface refers to a length in a direction orthogonal to the direction of extension of the sipe in the plan view. When the width W2 is within the above-described range, for example, the function of the incision 320 can more effectively be realized while assuring the rigidity of the block. An example of the width W2 is 1.5 mm to 2.5 mm. The width W1 of the sipe 31 is, for example, 5% to 35% of the width of the third circumferential groove 28.

Similarly, for the center block 40, one sipe 41 is formed along the direction of extension of the oblique groove 21. The sipe 41 is formed over the entire length of the ground-contacting surface of the block in the longitudinal direction, so as to bisect the ground-contacting surface of the block. The sipe 41 is formed from the ground-contacting surface of the block to the groove bottom or deeper than the groove bottom of the third circumferential groove 29 on the side wall 40d, and a sipe end 41b is opened to the third circumferential groove 29. On the other hand, the sipe 41 is not formed on the side wall 40c, and a sipe end 41a is not opened to the first circumferential groove 25.

On the center block 40, the incision 420 is formed along an edge of the sipe 41. At a portion adjacent to the sipe 41, an inclined surface 42 inclined at a predetermined angle with respect to the ground-contacting surface of the center block 40 is formed in a predetermined length range from the sipe end 41b. The inclination angle of the inclined surface 42 is, for example, 25° to 35°, and is identical to the inclination angle θ of the inclined surface 32. In addition, the incision 420 and the inclined surface 42 are formed, at the portion adjacent to the sipe 41, only along a second edge positioned at the rearward side in the tire primary rotational direction. In the present embodiment, the shape of the center block 40 is identical to the shape of the center block 30 inverted with respect to the tire equator surface, and, if the inverted center block 30 is slid in the tire circumferential direction, the center block 40 can be obtained.

### [Shoulder Block]

As shown in FIGs. 2 to 4, the shoulder blocks 50 and 60 are island-shape protrusions provided on both ends of the tread 10 in the tire width direction. A part of each of the shoulder blocks extends beyond the ground-contacting end E to the outer side in the tire width direction and to the inner side in the tire width direction, and upper surfaces of the blocks are significantly curved. Similar to the center blocks 30 and 40, the shoulder blocks 50 and 60 have an approximately rectangular shape in the plan view, elongated in the direction of extension of the oblique grooves 20 and 21, and a longitudinal direction of each block is inclined with respect to the tire width direction. On the other hand, inclination angles of the shoulder blocks 50 and 60 with respect to the tire width direction is more gradual in comparison to the center blocks 30 and 40.

The shoulder block 50 is a block larger than the center block 30 and the mediate block 70, and a length along the tire width direction is the longest among these three blocks. On the other hand, a ground-contacting area (A2) of the shoulder block 50 is less than or equal to a ground-contacting area (A3) of the mediate block 70. When a sum of the ground-contacting areas of the three blocks of the block group 100 is 100%, the ground-contacting area (A2) is, for example, 30% to 45%, and is desirably 33% to 38%. When a ratio of the ground-contacting area (A2) is within the above-described range, the handling performance during steady travel can be easily improved.

The ground-contacting area (A2) of the shoulder block 50 is larger than the ground-contacting area (A1) of the center block 30, and the ground-contacting areas of the blocks desirably satisfy a condition of A1<A2≤A3. As will be described later in detail, when a sum of the ground-contacting areas (A1 and A3) is 1.8 times to 1.9 times the ground-contacting area (A2), the braking performance and the handling performance during steady travel can both be realized in a more advanced manner. A ratio in the length between the oblique groove 20 along the tire circumferential direction and the ground-contacting surface of the shoulder block 50 is, for example, 3:7 to 4:6. The pneumatic tire 1 has a wider width of the oblique groove 20 and a smaller ground-contacting area of the shoulder block 50 in comparison to a typical summer tire, but, with the distribution advantage of the ground-contacting pressure by the incision 520, high braking performance can be realized.

Similarly, the shoulder block 60 is formed to be the largest among the three blocks of the block group 101, but a ground-contacting area of the shoulder block 60 is less than or equal to a ground-contacting area of the mediate block 80. In the present embodiment, a shape of the shoulder block 60 is identical to the shape of the shoulder block 50 inverted with respect to the tire equator surface, and, if the inverted shoulder block 50 is slid in the tire circumferential direction, the shoulder block 60 can be obtained.

The shoulder block 50 has side walls 50a and 50b formed along the oblique groove 20, and a side wall 50c formed at a first end in the longitudinal direction of the block (refer to FIGs. 3 and 4). A part of the shoulder block 50 protrudes beyond the ground-contacting end E to the outer side in the tire width direction, and forms the shoulder 11 of the tire. A second end in the longitudinal direction of the shoulder block 50 at a side opposite from the side wall 50c is connected to the side rib 14. The side wall 50a is positioned at the frontward side in the tire primary rotational direction of the shoulder block 50, and the side wall 50b is positioned at the rearward side in the tire primary rotational direction of the shoulder block 50.

The side walls 50a and 50b are formed to be gradually curved, and approximately parallel to each other. In the present embodiment, curvatures of the side walls 50a and 50b are large near the side wall 50c, and there is a small bent portion in the side walls 50a and 50b. The side wall 50c is formed in an approximately straight line shape in the plan view, opposes a side wall 70d of the mediate block 70 with the second circumferential groove 26 therebetween, and is connected to the side wall 70d via the protrusion 90 formed in the second circumferential groove 26. The details of the protrusion 90 will be described later.

One sipe 51 is formed on the shoulder block 50 along the direction of extension of the oblique groove 20. The sipe 51 is formed in a length beyond the ground-contacting end E along the longitudinal direction of the block from the side wall 50c which is an end positioned at the inner side in the tire width direction, at the center portion in the short side direction of the shoulder block 50. The sipe 51 is formed, for example, from the ground-contacting surface of the block to an upper surface of the protrusion 90, or deeper than the upper surface of the protrusion 90 and shallower than the oblique groove 20, on the side wall 50c. When a depth of the sipe 51 satisfies such a condition, the edge advantage can be easily improved while assuring the rigidity of the block.

The sipe 51 is opened to the second circumferential groove 26, and is placed to oppose, in the tire width direction, a sipe end 71b of a sipe 71 of the mediate block 70 with the second circumferential groove 26 therebetween. In other words, the sipe end 51a at the inner side in the tire width direction overlaps the sipe end 71b in the tire width direction, in the plan view of the tread 10. Further, the sipe 51 is formed in a length beyond the ground-contacting end E, and a sipe end 51b at the outer side in the tire width direction is positioned between the ground-contacting end E and the side rib 14. A height of the shoulder block 50 is gradually lowered toward the outer side in the tire width direction, and the depth of the sipe 51 is also gradually shallowed toward the sipe end 51b.

The incision 520 is formed on the shoulder block 50, along an edge of the sipe 51. An inclined surface 52 inclined at a predetermined angle with respect to the ground-contacting surface of the shoulder block 50 is formed on a portion adjacent to the sipe 51. As described above, the incision 520 distributes the ground-contacting pressure of the block to improve the frictional force with respect to the road surface while assuring the rigidity of the shoulder block 50. Because of this, the incision 520 significantly contributes to improvement of braking performance. An inclination angle of the inclined surface 52 is, for example, 15° to 60° or 20° to 50°, and is desirably 20° to 35° or 25° to 35°, and may be substantially identical to the inclination angle θ of the inclined surface 32. In this configuration, the function of the incision 520 can be more effectively realized.

The incision 520 and the inclined surface 52 may be formed, at the portions adjacent to the sipe 51, both along a first edge positioned at the frontward side in the tire primary rotational direction, and a second edge positioned at the rearward side in the tire primary rotational direction, but is desirably formed larger along the second edge than along the first edge. In the present embodiment, the incision 520 and the inclined surface 52 are formed only along the second edge of the sipe 51 positioned at the rearward side in the tire primary rotational direction. By forming the incision 520 only along the second edge, the advantage of the incision 520 and the suppression of the reduction of the rigidity of the block can both be realized in a more advanced manner. In addition, during abrupt braking or abrupt acceleration, the inclined surface 52 easily contacts the road surface, and the collapsing of the block can be easily suppressed. A first side wall of the sipe 51 opposing a second side wall of the sipe 51 adjacent to the incision 520 is formed approximately perpendicular to the ground-contacting surface. Further, the corner of the block along the first edge of the sipe 51 is not chamfered.

The incision 520 and the inclined surface 52 are desirably formed near the ground-contacting surface of the shoulder block 50. A depth of the incision 520 and the inclined surface 52 is, for example, 5% to 30% of a depth of the sipe 51 at the inner side of the tire width direction with respect to the ground-contacting end E, and is desirably 5% to 25% or 10% to 20% of the depth of the sipe 51. When the depth of the incision 520 is within the above-described range, the ground-contacting pressure can be effectively distributed while assuring the rigidity of the block. An example of the depth of the incision 520 and the inclined surface is 0.8 mm to 1.2 mm.

The incision 520 may be formed at a depth of greater than or equal to that of the incision 320 of the center block 30, but in the present embodiment, the incision 520 is formed to be shallower than the incision 320. The depth of the incision 520 is, for example, 60% to 90% or 65% to 85% of the depth of the incision 320. When the incision 520 is formed deep, although the distribution advantage of the ground-contacting pressure of the shoulder block 50 can be improved, the rigidity of the block tends to be reduced. Thus, in the present embodiment, a structure having a slightly shallow incision 520 formed in a long length is employed, to realize both the assurance of the rigidity of the block and the distribution advantage of the ground-contacting pressure in a more advanced manner.

The incision 520 and the inclined surface 52 are formed, at the portion adjacent to the sipe 51, from the sipe end 51a opened to the second circumferential groove 26 to a position beyond the ground-contacting end E. By forming the inclined surface 52 over the entire length of the ground-contacting surface of the shoulder block 50, the improvement advantage of braking performance due to the distribution of the ground-contacting pressure can be improved. In addition, by placing the end of the inclined surface 52 at an outer position than the ground-contacting end E, the concentration of the stress to the end of the inclined surface 52 can be suppressed, and the endurance of the block can thus be improved. Because the end of the inclined surface 52 does not exist on the ground-contacting surface constrained to the road surface, a larger step than that of the inclined surface 32 is formed at the end of the inclined surface 52.

As described above, the incision 520 and the inclined surface 52 are formed at a portion adjacent to the second circumferential groove 26. In addition, the incision 520 and the inclined surface 52 are formed at a position opposing, in the tire width direction, the inclined surface 72 of the mediate block 70 with the second circumferential groove 26 therebetween. In other words, the incisions 520 and 720 (the inclined surfaces 52 and 72) overlap in the tire width direction in the plan view of the tread 10. In this configuration, water can be efficiently drained from the sipes 51 and 71 to the second circumferential groove 26, and a water film between the tire and the road surface can be effectively removed. Further, the snow pocket for biting the snow can be efficiently enlarged, and the snow pillar shearing force can be improved.

The incision 520 and the inclined surface 52 are formed in a length not reaching the sipe end 51b. By placing the end of the inclined surface 52 at a position between the ground-contacting end E and the sipe end 51b, the reduction of the rigidity of the shoulder block 50 can be suppressed, and the endurance of the block can be improved. The end of the inclined surface 52 is desirably positioned near the ground-contacting end E at the shoulder 11. In addition, the rigidity of the shoulder block 50 can be adjusted with the position of the sipe end 51b at the shoulder 11. For example, when the rigidity of the shoulder block 50 becomes too high with respect to the other blocks, the sipe 51 may be elongated, to adjust the balance in the rigidities of the blocks.

The incision 520 and the inclined surface 52 are formed in a length of, for example, 30% to 60% (a length along the sipe 51) with respect to the length in the longitudinal direction of the upper surface of the block. As will be described later in detail, a ratio of the length of the incision and the inclined surface with respect to the length of the block is the largest in the shoulder block 50, among the three blocks of the block group 100. In addition, the length of the incision 520 and the inclined surface 52 along the sipe 51 is longer than the lengths, along the sipes, of the incisions and the inclined surfaces of the other two blocks. Because the incision 520 of the shoulder block 50 significantly contributes to the improvement of braking performance by the distribution of the ground-contacting pressure, the incision 520 is desirably formed in a long length on the ground-contacting surface of the block.

A width of the incision 520 and the inclined surface 52 is, for example, 1.3 times to 3.5 times a width of the sipe 51, and is desirably 1.5 times to 3 times or 1.5 times to 2.5 times the width of the sipe 51. When the width of the incision 520 is within the above-described range, for example, the ground-contacting pressure can be effectively distributed while assuring the rigidity of the block. The incision 52 may be formed in a width greater than or equal to that of the incision 320 of the center block 30, but in the present embodiment, the incision 520 is formed with a narrower width than the incision 320. The width of the incision 520 is, for example, 60% to 90% or 65% to 85% of the width of the incision 320. Because the incision 520 is desirably formed in a long length on the ground-contacting surface of the block as described above, the depth and the width of the incision 520 are set slightly small, so that the assurance of the rigidity of the block and the distribution advantage of the ground-contacting pressure can be both realized in a more advanced manner.

Similarly, one sipe 61 is formed on the shoulder block 60 along the direction of extension of the oblique groove 21. The sipe 61 is formed in a length from a sipe end 61a opened to the second circumferential groove 27, beyond the ground-contacting end E, and not reaching the side rib 14. A sipe end 61b at the outer side in the tire width direction is positioned between the ground-contacting end E and the side rib 14. The sipe end 61a is placed to oppose, in the tire width direction, a sipe end 81b of a sipe 81 of the mediate block 80 with the second circumferential groove 27 therebetween.

The incision 620 is formed on the shoulder block 60, along an edge of the sipe 61. The incision 620 and an inclined surface 62 are formed along a second edge of the sipe 61 positioned at the rearward side in the tire primary rotational direction, from the sipe end 61a opened to the second circumferential groove 27 to a position beyond the ground-contacting end E. An inclination angle of the inclined surface 62 with respect to the ground-contacting surface of the shoulder block 60 is, for example, 25° to 35°, and is identical to the inclination angle of the inclined surface 52. The incision 620 is formed at a position opposing, in the tire width direction, the incision 820 of the mediate block 80 in the plan view of the tread 10.

### [Mediate Block]

As shown in FIGs. 2 to 4, the mediate block 70 is an island-shape protrusion provided between the center block 30 and the shoulder block 50. Similarly, the mediate block 80 is an island-shape protrusion provided between the center block 40 and the shoulder block 60. Similar to the center blocks 30 and 40 and the shoulder blocks 50 and 60, the mediate blocks 70 and 80 have an approximately rectangular shape in the plan view, elongated in the direction of extension of the oblique grooves 20 and 21, and a longitudinal direction of each block is inclined with respect to the tire width direction. Inclination angles of the mediate blocks 70 and 80 with respect to the tire width direction are approximately equal to or slightly more gradual than the inclination angles of the center blocks 30 and 40.

The mediate block 70 is a block which is larger than the center block 30 and smaller than the shoulder block 50. On the other hand, as described above, the ground-contacting area (A3) of the mediate block 70 is the largest among the ground-contacting areas of the three blocks of the block group 100. When a sum of the ground-contacting areas of the three blocks is 100%, the ground-contacting area (A3) of the mediate block 70 is, for example, 33% to 45%, and is desirably 35% to 40%. When a ratio of the ground-contacting area (A3) is within the above-described range, handling performance during steady travel can be easily improved.

Similarly, the ground-contacting area of the mediate block 80 is the largest among the ground-contacting areas of the three blocks of the block group 101. In the present embodiment, a shape of the mediate block 80 is identical to a shape of the mediate block 70 inverted with respect to the tire equator surface, and, if the inverted mediate block 70 is slid in the tire circumferential direction, the mediate block 80 can be obtained.

The mediate block 70 has side walls 70a and 70b formed along the oblique groove 20, a side wall 70c formed along the third circumferential groove 28, and a side wall 70d formed along the second circumferential groove 26 (refer to FIGs. 3 and 4). The side walls 70a and 70b are gradually curved, and extend approximately parallel to each other, and the side wall 70b is formed to be longer than the side wall 70a. The side wall 70a is positioned at the frontward side in the tire primary rotational direction of the mediate block 70, and the side wall 70b is positioned at the rearward side in the tire primary rotational direction of the mediate block 70.

The side wall 70c is formed in an approximately straight line shape in the plan view, and opposes the side wall 30d of the center block 30 with the third circumferential groove 28 therebetween. The side wall 70d is formed in an approximately straight line shape in the plan view, and opposes the side wall 50c of the shoulder block 50 with the second circumferential groove 26 therebetween. While the side wall 70d is formed along the tire circumferential direction, the side wall 70c is inclined to be gradually positioned closer to the tire equator CL toward the rearward side in the tire primary rotational direction. Because of this, the side walls 70c and 70d are non-parallel to each other, and the side wall 70b is longer than the side wall 70a.

One sipe 71 is formed on the mediate block 70 along the direction of extension of the oblique groove 20. The sipe 71 is formed over an entire length of the block in the longitudinal direction, at a center portion in the short side direction, so as to bisect the mediate block 70. A sipe end 71a at the inner side in the tire width direction is opened to the third circumferential groove 28, and is placed to oppose, in the tire width direction, the sipe end 31b of the center block 30 with the third circumferential groove 28 therebetween. A sipe end 71b at the outer side in the tire width direction is opened to the second circumferential groove 26, and is placed to oppose the sipe end 51a of the shoulder block 50 with the second circumferential groove 26 therebetween.

In the present embodiment, the sipe 71 is formed in the same depth over the entire length of the mediate block 70 in the longitudinal direction. On the side wall 70c, the sipe 71 is formed with the same depth as the third circumferential groove 28, or is formed to be deeper than the third circumferential groove 28 and shallower than the oblique groove 20. On the side wall 70d, the sipe 71 is formed from the ground-contacting surface of the block to the upper surface of the protrusion 90 formed in the second circumferential groove 26, or deeper than the upper surface of the protrusion 90 and shallower than the oblique groove 20. When the depth of the sipe 71 satisfies such a condition, it becomes easier to improve the edge advantage while assuring the rigidity of the block.

The incision 720 is formed on the mediate block 70, in which a corner of the block is chambered along an edge of the sipe 71. At a portion adjacent to the sipe 71, an inclined surface 72 inclined at a predetermined angle with respect to the ground-contacting surface of the mediate block 70 is formed. As described above, the incision 720 has a function similar to that of the incisions 320 and 520. That is, the incision 720 distributes the ground-contacting pressure, improves the water drainage capability, and enlarges the snow pocket, while assuring the rigidity of the block. An inclination angle of the inclined surface 72 is, for example, 15° to 60° or 20° to 50°, and is desirably 20° to 35° or 25° to 35°. In this configuration, the function of the incision 720 can be more effectively realized. The inclination angle of the inclined surface 72 may be substantially identical to the inclination angles of the inclined surfaces 32 and 52.

The incision 720 and the inclined surface 72 may be formed, at a portion adjacent to the sipe 71, both along a first edge positioned at the frontward side in the tire primary rotational direction and a second edge positioned at the rearward side in the tire primary rotational direction, but desirably, is formed to be larger at a portion adjacent to the second edge than at a portion adjacent to the first edge. In the present embodiment, the incision 720 and the inclined surface 72 are formed only along the second edge of the sipe 71 positioned at the rearward side in the tire primary rotational direction. In all of the three blocks of the block group 100, the incision along the sipe is formed only along the second edge. In this configuration, the advantage of the incision and the suppression of the reduction of the rigidity of the block can be both realized in a more advanced manner. In addition, during abrupt braking and abrupt acceleration, the inclined surface may easily contact the road surface, and the collapsing of the block can be easily suppressed. A first side wall of the sipe 71 opposing a second side wall of the sipe 71 adjacent to the incision 720 is formed approximately perpendicular to the ground-contacting surface. Further, the corner of the block along the first edge of the sipe 71 is not chamfered.

Similar to the inclined surface 32, the inclined surface 72 includes two regions (a first region 72a and a second region 72b) differing from each other in planar shape of the surface (refer to FIG. 4). The first region 72a is a surface of an approximately rectangular shape in the plan view, approximately parallel to the length direction of the sipe 71, and is formed in a length exceeding 50% of the entire length of the inclined surface 72, desirably, in a length of 70% to 90% of the entire length. On the other hand, the second region 72b is a surface of an approximately triangular shape in the plan view, inclined more to the side of the sipe end 71b than the first region 72a, and has its area reduced toward the side of the sipe end 71a. By providing the second region 72b, a step formed at the end of the inclined surface 72 can be made gradual, and the concentration of the stress to the end of the inclined surface 72 can be suppressed.

The incision 720 and the inclined surface 72 are desirably formed near the ground-contacting surface of the block. A depth of the incision 720 and the inclined surface 72 is, for example, 10% to 30% of the depth of the sipe 71 at the first region 72a, and is desirably 10% to 25% or 10% to 20% of the depth of the sipe 71. When the depth of the incision 720 is within the above-described range, the function of the incision 720 can be more effectively realized while assuring the rigidity of the block. The depth of the incision 720 is, for example, substantially identical to the depth of the incision 320 of the center block 30.

The incision 720 and the inclined surface 72 are formed, at the portion adjacent to the sipe 71, in a predetermined length range from the sipe end 71b positioned on the side of the shoulder block 50. The predetermined length is desirably a length not reaching the sipe end 71a on the side of the third circumferential groove 28, and the incision 720 and the inclined surface 72 are not formed near the sipe end 71a. In addition, the incision 720 and the inclined surface 72 are formed in, for example, a length of 20% to 40% (length along the sipe 71) with respect to the length of the upper surface of the block in the longitudinal direction. As will be described later in detail, the length of the incision and the inclined surface along the sipe, and the ratio of the length of the incision and the inclined surface with respect to the length of the block are the smallest in the mediate block 70 among the three blocks of the block group 100.

A width of the incision 720 and the inclined surface 72 is, for example, 1.3 times to 3.5 times a width of the sipe 71, and is desirably 1.5 times to 3 times, or 2 times to 3 times the width of the sipe 71. When the width of the incision 720 is within the above-described range, the function of the incision 72 can be more effectively realized while assuring the rigidity of the block. The width of the incision 720 may be, for example, substantially identical to the width of the incision 320 of the center block 30. The sipe 71 may be formed in the same width as the sipes 31 and 51, or in a wider width than the sipes 31 and 51.

Similarly, on the mediate block 80, one sipe 81 is formed along the direction of extension of the oblique groove 21. The sipe 81 is formed over the entire length of the block in the longitudinal direction, so as to bisect the mediate block 80. A sipe end 81a at the inner side in the tire width direction is opened to the third circumferential groove 29, and is placed to oppose, in the tire width direction, the sipe end 41b of the center block 40 with the third circumferential groove 29 therebeteen. In addition, a sipe end 81b at the outer side in the tire width direction is opened to the second circumferential groove 27, and is placed to oppose the sipe end 61a of the shoulder block 60 with the second circumferential groove 27 therebetween.

The incision 820 is formed on the mediate block 80, along an edge of the sipe 81. The incision 820 and an inclined angle 82 are formed in a predetermined length range from the sipe end 81b, along a second edge of the sipe 81 positioned at the rearward side in the tire primary rotational direction. An inclination angle of the inclined surface 82 with respect to the ground-contacting surface of the mediate block 80 is, for example, 25° to 35°, and is identical to the inclination angle of the inclined surface 72. Further, the incision 820 is formed at a position opposing, in the tire width direction, the incision 620 of the shoulder block 60 in the plan view of the tread 10.

With reference to FIGs. 2 to 5, the block groups 100 and 101 will be supplementarily described.

As described above, in the block group 100, three blocks are arranged in a continuous manner along the direction of extension of the oblique groove 20, and the block group 100 as a whole has a gradually curved shape in the plan view. Similar to the oblique groove 20, the block group 100 is inclined with respect to the tire width direction so that the block group is gradually positioned closer to the rearward side in the tire primary rotational direction from the center portion in the tire width direction toward the outer side in the tire width direction. In other words, among the three blocks of one block group 100, the center block 30 is positioned at the frontward side in the tire primary rotational direction relative to the shoulder block 50.

In the block group 100, the protrusion 90 which connects the lower parts of the shoulder block 50 and the mediate block 70 is formed. By providing the protrusion 90, the rigidities of the two connected blocks can be increased, and dry performance can thus be improved. The protrusion 90 is formed in the second circumferential groove 26 only in a range sandwiched between the shoulder block 50 and the mediate block 70, and is arranged, in the tire width direction, with the sipe ends 51a and 71b in the plan view of the tread 10. In other words, the sipe ends 51a and 71b are formed at positions adjacent to the protrusion 90.

With respect to the block group 100, the third circumferential groove 28 which separates the center block 30 and the mediate block 70 is formed, but the depth of the third circumferential groove 27 is shallower than that of the oblique groove 20. Because of this, the lower parts of the center block 30 and the mediate block 70 can be described as being connected by a portion protruding from the groove bottom of the oblique groove 20. That is, in the block group 100, lower parts of adjacent blocks are connected to each other with the protrusion having a low height. In this configuration, the rigidity of the block group 100 can be improved, and dry performance can be improved.

A height of the upper surface of the protrusion 90 and a height of the groove bottom of the third circumferential groove 28 are, for example, approximately identical to each other. Here, the height of the upper surface of the protrusion 90 refers to a length from the groove bottom of the oblique groove 20 to the upper surface along the tire radial direction (this is similarly true for the height of the groove bottom of the third circumferential groove 28). The height of the protrusion 90 is, for example, 10% to 50%, or 20% to 40% of the depth of the second circumferential groove 26. When the height of the protrusion 90 is within the above-described range, the rigidity of the block can be effectively improved without degrading the water drainage capability. The second circumferential groove 26 is formed in the same depth as the oblique groove 20 in portions where there is no protrusion 90.

In the block groups 100 and 101, the blocks are placed such that the side wall 30b of the center block 30 opposes the side wall 40c of the center block 40 with the first circumferential groove 25 therebetween, and the side wall 30c opposes the side wall 40b with the first circumferential groove 25 therebetween, and the block groups 100 and 101 have a staggered pattern in which the block groups 100 and 101 are alternately arranged along the tire equator CL. At least a part of the first circumferential groove 25 is formed to be shallower than the oblique groove 20, similar to the third circumferential groove 28. Because of this, the lower parts of the center blocks 30 and 40 may be described as being connected by a portion protruding from the groove bottom of the oblique groove 20.

In the block groups 100 and 101, the lower parts of the adjacent blocks are connected to each other via the protrusion, and the block groups 100 and 101 are formed over the left and right side ribs 14. In addition, because the center block 30 is connected to two center blocks 40 adjacent to the center block 30 in the tire circumferential direction, the lower parts of the center blocks 30 and 40 are connected to each other in the tire circumferential direction. Because of this, in the pneumatic tire 1, the center blocks 30 and 40 at the center portion in the tire width direction and the side ribs 14 at the respective sides in the tire width direction function as a frame, and high rigidity is assured for the pneumatic tire 1 as a whole.

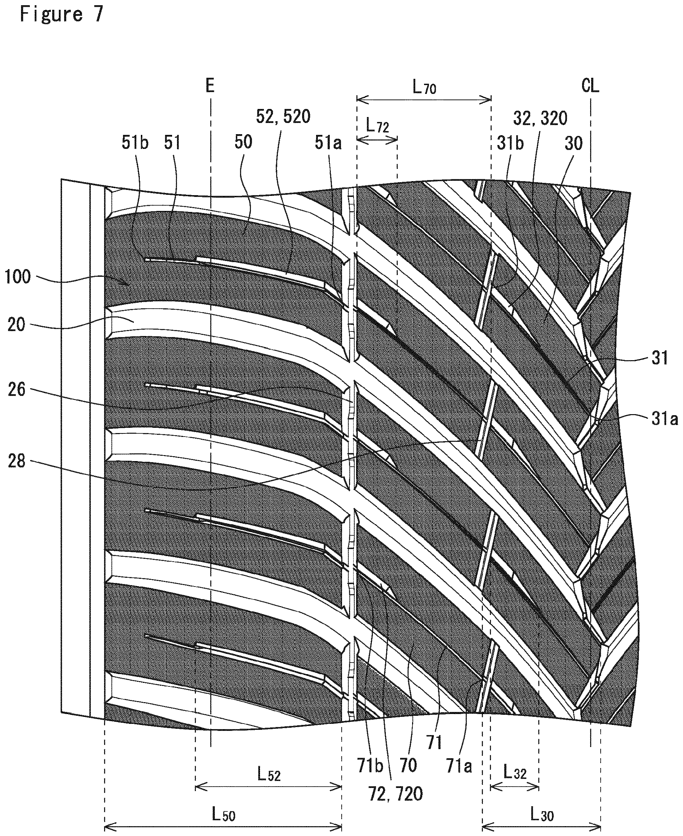

With reference to FIG. 7, the ground-contacting areas of the blocks, and the lengths of the incisions and the inclined surfaces formed on the blocks will be further described. FIG. 7 is a plan view showing a part of the tread 10, and illustrates lengths of the blocks and the inclined surfaces (incisions) along the tire width direction. The length of the inclined surface along the tire width direction is identical to the length of the incision.

As shown in FIG. 7, in the three blocks of the block group 100, the shoulder block 50 is the largest (has the largest volume), but, with regard to the ground-contacting area, the ground-contacting area (A3) of the mediate block 70 is greater than or equal to the ground-contacting area (A2) of the shoulder block 50. In the present invention, the ground-contacting area of the block refers to an area of a portion contacting the road surface under the above-described condition, and includes an area of a portion in which the sipe is formed. In the case of the mediate block 70, an area of an entire region of the upper surface of the block is the ground-contacting area (A3). On the other hand, in the case of the shoulder block 50, an area of a region, of the upper surface of the block, positioned at the inner side in the tire width direction relative to the ground-contacting end E is the ground-contacting area (A2).

By setting the ground-contacting area (A3) of the mediate block 70 to be greater than or equal to the ground-contacting area (A2) of the shoulder block 50, the handling performance during steady travel can be improved. The ground-contacting area (A3) is desirably, for example, larger than the ground-contacting area (A2) and lower than or equal to 1.3 times the ground-contacting area (A2) or lower than or equal to 1.2 times the ground-contacting area (A2). The ground-contacting area (A1) of the center block 30 is desirably smaller than the ground-contacting area (A2). The ground-contacting area (A1) is, for example, 60% to 90%, or 70% to 90% of the ground-contacting area (A2).

That is, the ground-contacting areas of the three blocks of the block group 100 satisfy the condition of A1<A2≤A3, and are desirably, A1<A2<A3. In this configuration, both superior braking performance and superior handling performance during steady travel can be easily realized. In the present embodiment, the blocks of the block group 101 satisfy the same condition of the ground-contacting areas as in the case of the block group 100.

A sum of the ground-contacting areas (A1 and A3) of the center block 30 and the mediate block 70 is desirably 1.7 times to 2.0 times the ground-contacting area (A2) of the shoulder block 50, and is more desirably 1.8 times to 1.9 times the ground-contacting area (A2). When this condition, (A2 x (1.8 to 1.9) = A1 + A3), is satisfied, braking performance and handling performance during steady travel can both be realized in a more advanced manner. When the sum of the ground-contacting areas (A1 and A3) is lower than 1.8 times the ground-contacting area (A2), the handling performance during steady travel tends to be reduced in comparison to the case in which the above-described condition is satisfied. On the other hand, when the sum of the ground-contacting areas (A1 and A3) exceeds 1.9 times the ground-contacting area (A2), braking performance tends to be reduced in comparison to the case in which the above-described conditions is satisfied.

When the sum of the ground-contacting areas of the three blocks of the block group 100 is 100%, example desirable ground-contacting areas of the blocks are as follows:
Ground-contacting area (A1): 25% to 32% or 27% to 32%;
Ground-contacting area (A2): 33% to 38% or 33% to 36%; and
Ground-contacting area (A3): 35% to 40% or 35% to 38%.

When the condition of A1<A2≤A3, desirably, A1<A2<A3, is satisfied and the ratios of the ground-contacting areas (A1 to A3) are in these ranges, braking performance and handling performance during steady travel can both be realized in a more advanced manner.

With regard to the lengths of the incisions, when a ratio of a length L₃₂ of the incision 320 along the sipe 31 with respect to a length L₃₀ of the upper surface of the center block 30 along the longitudinal direction (L₃₂/L₃₀) is L1, a ratio of a length L₅₂ of the incision 520 along the sipe 51 with respect to a length L₅₀ of the upper surface of the shoulder block 50 along the longitudinal direction (L₅₂/L₅₀) is L2, and a ratio of a length L₇₂ of the incision 720 along the sipe 71 with respect to a length L₇₀ of the upper surface of the mediate block 70 along the longitudinal direction (L₇₂/L₇₀) is L3, desirably, the ratio (L2) is larger than the ratio (L1) and the ratio (L3). That is, among the three blocks of the block group 100, the ratio (L2) for the shoulder block 50 is the largest.

In the present embodiment, the ratio (L1) for the center block 30 is the second largest, and the ratio (L3) for the mediate block 70 is the smallest. In other words, the pneumatic tire 1 satisfies a condition of L3<L1<L2. In this configuration, braking performance on various road surface states such as wet road surface, snow road surface, and dry road surface can be improved, and wet performance, snow performance, and dry performance can be effectively improved. With regard to the width and the depth of the incision, the width and the depth are the smallest for the incision 520 of the shoulder block 50 in comparison to the incision 320 of the center block 30 and the incision 720 of the mediate block 70.

Here, the length of the upper surface of the block along the longitudinal direction refers to a length of the block in the longitudinal direction, along the upper surface of the block. In the present embodiment, this length is a length from an end at the inner side in the tire width direction of the upper surface of the block to an end at the outer side in the tire width direction, along the upper surface of the block. In FIG. 7, in order to clarify the drawing, the length of the upper surface of the block along the longitudinal direction is illustrated with an arrow along the tire width direction, but, because the block is inclined with respect to the tire width direction, and in particular, because the upper surface of the shoulder block 50 is significantly curved, the length L₅₀ in the shoulder block 50 is longer than the illustrated length. Similarly, while the length of the incision along the sipe is shown in FIG. 7, because the sipe is inclined with respect to the tire width direction, the length is longer than the illustrated length.

A ratio of the length L₃₂ of the incision 320 with respect to a length of the sipe 31 of the center block 30 is approximately equal to the above-described ratio (L1). In addition, a ratio of the length L₇₂ of the incision 720 with respect to a length of the sipe 71 of the mediate block 70 is approximately equal to the above-described ratio (L3). On the other hand, a ratio of the length L₅₂ of the incision 520 with respect to a length of the sipe 51 of the shoulder block 50 is larger than the above-described ratio (L2), because the sipe 51 is not formed over the entire length of the upper surface of the block in the longitudinal direction, and the incision 520 is formed from the sipe end 51a of the sipe 51 to the region near the sipe end 51b.

Example desirable ratios of the lengths of the incisions along the sipes with respect to the lengths of the upper surfaces of the blocks in the longitudinal direction, along the upper surface of the blocks of the block group 100 are as follows:
Ratio (L1): 30% to 50% or 35% to 45%;
Ratio (L2): 30% to 60% or 45% to 55%; and
Ratio (L3): 20% to 40% or 25% to 30%.

When the condition of L3<L1<L2 is satisfied and the ratios (L1 to L3) are within the above-described ranges, wet performance, snow performance, and dry performance can be more effectively improved.

The length L₅₂ of the incision 520 is desirably longer than the length L₃₂ of the incision 320 and the length L₇₂ of the incision 720. Further, the length L₃₂ of the incision 320 is desirably longer than the length L₇₂ of the incision 720. The center blocks 30 and 40 are placed close to each other with the first circumferential groove 25 therebetween, and the lower parts thereof are connected to each other. Because of this, the center blocks 30 and 40 can support each other, and the incisions 320 and 420 can be formed in a long length on the center blocks 30 and 40. That is, the pneumatic tire 1 satisfies the condition of L₇₂<L₃₂<L₅₂. The length L₅₂ of the incision 520 is, for example, 2 times to 4 times or 2.5 times to 3.5 times the length L₃₂ of the incision 320 (this is similarly true for the length of the incision 520 at the ground-contacting surface of the block). As described above, the sipe 51 and the incision 520 are formed over the entire length of the ground-contacting surface of the shoulder block 50.

As described, according to the pneumatic tire 1 having the above-described structure, at least one of braking performance or handling performance on a wet road surface and a dry road surface is improved.

With the incisions 520 and 620 formed along the edges of the sipes of the shoulder blocks 50 and 60, the ground-contacting area of the block can be reduced and the ground-contacting pressure can consequently be effectively distributed, while assuring the rigidity of the block. The distribution advantage of the ground-contacting pressure has been proven by the present inventors. When the ground-contacting pressure can be distributed over a wide range of the ground-contacting surface of the block, the frictional force with respect to the road surface is increased, and the braking performance is improved. The pneumatic tire 1 has superior water drainage performance and superior snow removal performance due to, for example, the wide widths of the oblique grooves 20 and 21, but, as a consequence, the ground-contacting areas (A2) of the shoulder blocks 50 and 60 are smaller. However, with the distribution advantage of the ground-contacting pressure, high braking performance can be obtained on the wet road surface and the dry road surface.

In addition, the incision 520 formed on the shoulder block 50 and the incision 720 formed on the mediate block 70 are formed adjacent to the second circumferential groove 26, and are placed to oppose each other in the tire width direction with the second circumferential groove 26 therebetween. Similarly, the incision 620 of the shoulder block 60 and the incision 820 of the mediate block 80 are formed adjacent to the second circumferential groove 27, and are placed to oppose each other in the tire width direction with the second circumferential groove 27 therebetween. In this configuration, the water can be efficiently drained from the sipes to the circumferential grooves, and the water film between the tread 10 and the road surface can be effectively removed. Thus, water drainage performance is significantly improved. Further, the snow pocket can be efficiently enlarged.

Further, by forming the incisions 320 and 420 along the edges of the sipes of the center blocks 30 and 40, while the rigidity of the block is assured, water drainage capability can be improved, and the snow pocket for biting the snow can be enlarged. The center blocks 30 and 40 can firmly grip on the snow, for example, with the portions in which the incisions 320 and 420 are formed, and thus, the traction on the snow road surface is improved. In particular, by forming the incisions on the blocks including the mediate blocks 70 and 80, and accurately controlling the lengths of the incisions to satisfy the above-described conditions, wet performance, snow performance, and dry performance can be more effectively improved.

Further, by the ground-contacting areas of the blocks satisfying the condition of A1<A2≤A3, superior handling performance during steady travel can be obtained. In particular, when at least the inclined surfaces 52 and 62 are formed along the sipes 51 and 61 of the shoulder blocks 50 and 60, and the above-described condition of A2 x (1.8 to 1.9) = (A1 + A3) is satisfied, braking performance and handling performance during steady travel can both be realized in a more advanced manner. Steady travel refers to a typical traveling state different from an abnormal traveling state such as, for example, abrupt steering during high-speed travel.

As described above, the pneumatic tire 1 is suitable for an all-season tire. In general, for an all-season tire, wet performance and dry performance are of high importance. In this regard, the pneumatic tire 1 is superior not only in wet performance and dry performance, but also in snow performance. In the present embodiment, the ground-contacting areas of the blocks, and the placements and sizes of the incisions of the blocks are balanced and accurately controlled, so that performance suitable for an all-season tire can be realized by the tread 10 as a whole.

The embodiment described above can be arbitrarily changed in design within a range not adversely affecting the advantage of the present invention. For example, in the above-described embodiment, the shape of the block group 100 is the same as the shape of the block group 101 inverted with respect to the tire equator surface, but alternatively, the shape of one of the block groups may be different from the inverted shape of the other block group. Alternatively, the tread pattern may be a pattern symmetric in the left and right direction with respect to the tire equator surface.

In addition, a configuration may be employed in which the sipe and the incision are not formed on a part or all of the blocks, within a range not adversely affecting the advantage of the present invention. Further, in the above-described embodiment, the ground-contacting areas (A3) of the mediate blocks 70 and 80 are set to be larger than the ground-contacting areas (A2) of the shoulder blocks 50 and 60, but alternatively, the ground-contacting area (A2) may be set to be larger than the ground-contacting area (A3) within a range not adversely affecting the advantage of the present invention. However, the rigidity of the block, the ground-contacting pressure, the water drainage and snow removal performances, and the like are desirably controlled in a well-balanced manner for the tread 10 as a whole. Thus, in order to more effectively improve wet performance, snow performance, and dry performance, desirably, the incisions are formed on the blocks (in particular, the shoulder block), and the ground-contacting area (A3) is set to be larger than the ground-contacting area (A2).

In addition, in the above-described embodiment, one sipe is formed on each block, but alternatively, two or more sipes may be formed on each block. In the above-described embodiment, the incision is formed along the edge of the sipe so that the water drainage capability and the wet performance are improved without increasing the number of sipes. However, the number of sipes may be increased within a range not adversely affecting the advantage of the present invention. For example, the number of sipes may be increased within a range not adversely affecting the dry performance due to reduction of the rigidity of the block.

### EXAMPLES

The advantage of the incision will now be described further with reference to Examples. The present invention, however, is not limited to these Examples. While the below-described result indicates that braking performance can be improved by the presence of the incision, the pneumatic tire according to the present invention is not limited to a tire having the incision as a necessary constituting element.

### <Example 1>

A pneumatic tire A1 (having a tire size of 205/55R16 91H) was fabricated having the block pattern shown in FIGs. 1 to 7 (the center block, the shoulder block, the mediate block, the oblique groove, and the circumferential groove), and in which incisions C, S, and M were respectively formed along edges of sipes of the blocks. The incisions were formed only along second edges positioned at the rearward side in the tire primary rotational direction, in portions adjacent to the sipes of the blocks. Shapes of the incisions C, S, and M were similar to the shapes of the incisions shown in FIGs. 1 to 7. The incisions S and M were formed at positions opposing each other in the tire width direction with the circumferential groove therebetween.

Lengths of upper surfaces of the blocks in the longitudinal direction, sizes of the incisions, and the like were as follows:
Length L₃₀ of the upper surface of the center block in the longitudinal direction: 34.3 mm;
Length L₅₀ of the upper surface of the shoulder block in the longitudinal direction: 60.0 mm;
Length L₇₀ of the upper surface of the mediate block in the longitudinal direction: 36.8 mm;
Width W1 of the sipe: 0.6 mm (sizes of the sipes of the other blocks are similar);
Depth D1 of the sipe: 6 mm (sizes of the sipes of the other blocks are similar);
Length L₃₂ of the incision C of the center block along the sipe: 15.08 mm;
Ratio L1 of the length L₃₂ of the incision with respect to the length L₃₀ of the upper surface of the block: 0.44 (44%);
Width W2 of the incision C: 2 mm;
Depth D2 of the incision C: 1 mm;
Length L₅₂ of the incision S of the shoulder block: 32.4 mm;
Ratio L2 of the length L₅₂ of the incision with respect to the length L₅₀ of the upper surface of the block: 0.54 (54%);
Width of the incision S: 2 mm;
Depth of the incision S: 1 mm;
Length L₇₂ of the incision M of the mediate block: 10.4 mm;
Ratio L3 of the length L₇₂ of the incision with respect to the length L₇₀ of the upper surface of the block: 0.28 (28%).
Width of the incision M: 2 mm;
Depth of the incision M: 1 mm;
Inclination angle of the inclined surface with respect to the upper surface of the block: 20° to 30°.

### <Example 2>

A pneumatic tire A2 was fabricated in a manner similar to Example 1 except that the incision C was not formed on the center block.

### <Example 3>

A pneumatic tire A3 was fabricated in a manner similar to Example 1 except that the lengths of the incisions were changed (ratios L1 to L3 were changed to values shown in TABLE 1).

### <Referential Example 1>

A pneumatic tire B1 was fabricated in a manner similar to Example 1 except that the incision was not formed on any of the blocks.

For the pneumatic tires A1 to A3 and B1, wet braking performance (WBP) and dry braking performance (DBP) were evaluated through the following methods. TABLE 1 shows the evaluation results along with the ratios L1 to L3. In the evaluation result of TABLE 1, a relative value is shown, with a value for the pneumatic tire B1 being 100.

### [Evaluation of Wet Braking Performance (WBP)]

An actual vehicle (with two passengers) equipped with a test tire (pneumatic tires A1 to A3 and B1) was caused to travel on a wet road, a braking distance was measured when an ABS was activated by applying a braking force at a velocity of 100 km/h, and an inverse value of the braking distance was calculated. The performance was evaluated with an index having the result of Referential Example 1 as 100. A higher value of the index indicates higher wet braking performance.

### [Evaluation of Dry Braking Performance (DBP)]

An actual vehicle (with two passengers) equipped with the test tire was caused to travel on a dry road, the braking distance was measured when the ABS was activated by applying a braking force at a velocity of 100 km/h, and an inverse value of the braking distance was calculated. The performance was evaluated with an index having the result of Referential Example 1 as 100. A higher value of the index indicates higher dry braking performance.

**[TABLE 1]**

| | A1 | A2 | A3 | B1 |
|---|---|---|---|---|
| L1 | 42 | 0 | 60 | 0 |
| L2 | 27 | 27 | 50 | 0 |
| L3 | 52 | 52 | 70 | 0 |
| WBP | 106 | 104 | 108 | 100 |
| DBP | 100 | 99 | 98 | 100 |

As shown in TABLE 1, by forming the incisions S and M on the shoulder block and the mediate block at positions opposing each other with the circumferential groove therebetween, wet braking performance can be improved while maintaining the braking performance. In addition, when the incision C is added to the center block, wet braking performance can more significantly be improved. In particular, in the pneumatic tire A1, wet braking performance is significantly improved without reduction of dry braking performance, in comparison to the pneumatic tire B1.

### REFERENCE SIGNS LIST

1 PNEUMATIC TIRE; 10 TREAD; 11 SHOULDER; 12 SIDE WALL; 13 BEAD; 14 SIDE RIB; 15 CARCASS; 16 BELT; 17 INNER LINER; 18 BEAD CORE; 19 BEAD FILLER; 20, 21 OBLIQUE GROOVE; 25 FIRST CIRCUMFERENTIAL GROOVE; 26, 27 SECOND CIRCUMFERENTIAL GROOVE; 28, 29 THIRD CIRCUMFERENTIAL GROOVE; 30, 40 CENTER BLOCK; 30a to 30d, 40a to 40d, 50a to 50c, 70a to 70d SIDE WALL; 301c FIRST SURFACE; 302c SECOND SURFACE; 303c THIRD SURFACE; 31, 41, 51, 61, 71, 81 SIPE; 31a, 31b, 41a, 41b, 51a, 51b, 61a, 61b, 71a, 71b, 81a, 81b SIPE END; 32, 42, 52, 62, 72, 82 INCLINED SURFACE; 32a, 72a, FIRST REGION; 32b, 72b SECOND REGION; 50, 60 SHOULDER BLOCK; 70, 80 MEDIATE BLOCK; 90 PROTRUSION; 100, 101 BLOCK GROUP; 320, 420, 520, 620, 720, 820 INCISION; CL TIRE EQUATOR; E GROUND-CONTACTING END; P1, P2, P4 CORNER; P5 INTERSECTION.

## Claims

1. A pneumatic tire (1) comprising:
a tread (10), wherein
the tread (10) includes:
a plurality of oblique grooves (20, 21), each extending from a ground-contacting end (E) to an equator (CL);
a plurality of blocks (100, 101), each formed along the oblique groove (20, 21) and alternately placed with the oblique groove (20, 21) in a tire circumferential direction; and
a plurality of circumferential grooves (25, 26, 27, 28, 29) which partition the block (100, 101) into a shoulder zone (50, 60) positioned on the side of the ground-contacting end (E), a center zone (30, 40) positioned on the side of the equator (CL), and an intermediate zone (70, 80) positioned between the shoulder zone (50, 60) and the center zone (30, 40),
a ground-contacting area of the intermediate zone (70, 80) is greater than or equal to a ground-contacting area of the shoulder zone (50, 60),
a sum of ground-contacting areas of the intermediate zone (70, 80) and the center zone (30, 40) is 1.7 times to 2.0 times a ground-contacting area of the shoulder zone (50, 60), and
when a sum of the ground-contacting areas of the shoulder zone (50, 60), the intermediate zone (70,80) , and the center zone (30, 40) is 100%, the ground-contacting area of the shoulder zone (50, 60) is 33% to 38%, the ground-contacting area of the intermediate zone (70, 80) is 35% to 40%, and the ground-contacting area of the center zone (30, 40) is 25% to 32%, and the ground-contacting area of the intermediate zone (70, 80) is larger than the ground-contacting area of the shoulder zone (50, 60) and equal to or smaller than 1.3 times the ground-contacting area of the shoulder zone (50, 60), wherein the ground-contacting area of each block of the pneumatic tire 1 refers to an area of the portion contacting the flat road surface under application of the load which is 80% of the maximum load capability at the regular internal pressure.

2. The pneumatic tire (1) according to claim 1, wherein
an inclination of the oblique groove (20, 21) with respect to a tire width direction is increased on the side of the equator (CL) in comparison with the side of the ground-contacting end (E).

3. The pneumatic tire (1) according to Claim 1 or 2, wherein the plurality of oblique grooves (20, 21) and the plurality of blocks (100, 101) have planar shapes being curved and convex toward a rearward side of the tire primary rotational direction.

## Patentansprüche

1. Luftreifen (1), umfassend:
eine Lauffläche (10), wobei
die Lauffläche (10) umfasst:
eine Vielzahl von schrägen Rillen (20, 21), die sich jeweils von einem Bodenkontaktende (E) zu einem Äquator (CL) erstrecken,
eine Vielzahl von Blöcken (100, 101), die jeweils entlang der schrägen Rille (20, 21) ausgebildet sind und abwechselnd mit der schrägen Rille (20, 21) in einer Reifenumfangsrichtung angeordnet sind; und eine Vielzahl von Umfangsrillen (25, 26, 27, 28, 29), die den Block (100, 101) in eine Schulterzone (50, 60), die auf der Seite des Bodenkontaktendes (E) positioniert ist, eine Mittelzone (30, 40), die auf der Seite des Äquators (CL) positioniert ist, und eine Zwischenzone (70, 80), die zwischen der Schulterzone (50, 60) und der Mittelzone (30, 40) positioniert ist,
eine Bodenkontaktfläche der Zwischenzone (70, 80) größer oder gleich einer Bodenkontaktfläche der Schulterzone (50, 60) ist,
die Summe der Bodenkontaktflächen der Zwischenzone (70, 80) und der Mittelzone (30, 40) das 1,7- bis 2,0-fache der Bodenkontaktfläche der Schulterzone (50, 60) beträgt und
wenn die Summe der Bodenkontaktflächen der Schulterzone (50, 60), der Zwischenzone (70, 80) und der Mittelzone (30, 40) 100 % beträgt, dann ist die Bodenkontaktfläche der Schulterzone (50, 60) 33 % bis 38 %, die Bodenkontaktfläche der Zwischenzone (70, 80) ist 35 % bis 40 % und die Bodenkontaktfläche der Mittelzone (30, 40) ist 25 % bis 32 % und die Bodenkontaktfläche der Zwischenzone (70, 80) ist größer als die Bodenkontaktfläche der Schulterzone (50, 60) und gleich oder kleiner als das 1,3-fache der Bodenkontaktfläche der Schulterzone (50 , 60),
wobei die Bodenkontaktfläche jedes Blocks des Luftreifens (1) sich auf eine Fläche des Abschnitts bezieht, der die ebene Straßenoberfläche unter Anwendung der Last berührt, die 80 % der maximalen Tragfähigkeit bei dem regulären Innendruck beträgt.

2. Luftreifen (1) nach Anspruch 1, wobei
eine Neigung der schrägen Rille (20, 21) in Bezug auf eine Reifenbreitenrichtung auf der Seite des Äquators (CL) im Vergleich zu der Seite des Bodenkontaktendes (E) erhöht ist.

3. Luftreifen (1) nach Anspruch 1 oder 2, wobei
die Vielzahl von schrägen Rillen (20, 21) und die Vielzahl von Blöcken (100, 101) ebene Formen aufweisen, die in Richtung einer hinteren Seite der primären Drehrichtung des Reifens gekrümmt und konvex sind.

## Revendications

1. Pneumatique (1) comprenant :
une bande de roulement (10),
la bande de roulement (10) comprenant :
une pluralité de rainures obliques (20, 21), chacune s'étendant d'une extrémité de contact au sol (E) à un équateur (CL) ;
une pluralité de blocs (100, 101), chacun formé le long de la rainure oblique (20, 21) et disposé en alternance avec la rainure oblique (20, 21) dans une direction circonférentielle du pneu ; et
une pluralité de rainures circonférentielles (25, 26, 27, 28, 29) qui divisent le bloc (100, 101) en une zone d'épaulement (50, 60) positionnée du côté de l'extrémité de contact au sol (E), une zone centrale (30, 40) positionnée du côté de l'équateur (CL), et une zone intermédiaire (70, 80) positionnée entre la zone d'épaulement (50, 60) et la zone centrale (30, 40),
une surface de contact au sol de la zone intermédiaire (70, 80) est supérieure ou égale à une surface de contact au sol de la zone d'épaulement (50, 60),
une somme des surfaces de contact au sol de la zone intermédiaire (70, 80) et de la zone centrale (30, 40) est comprise entre 1,7 fois à 2,0 fois la surface de contact au sol de la zone d'épaulement (50, 60), et
lorsqu'une somme des surfaces de contact au sol de la zone d'épaulement (50, 60), de la zone intermédiaire (70, 80) et de la zone centrale (30, 40) vaut 100 %, la surface de contact au sol de la zone d'épaulement (50, 60) est comprise entre 33 % et 38 %, la surface de contact au sol de la zone intermédiaire (70, 80) est comprise entre 35 % et 40 %, et la surface de contact au sol de la zone centrale (30, 40) est comprise entre 25 % et 32 %, et la surface de contact au sol de la zone intermédiaire (70, 80) est plus grande que la surface de contact au sol de la zone d'épaulement (50, 60) et égale ou inférieure à 1,3 fois la surface de contact au sol de la zone d'épaulement (50, 60), la surface de contact au sol de chaque bloc du pneumatique 1 correspondant à une surface de la partie en contact avec la surface plane de la route sous l'application d'une charge correspondant à 80 % de la capacité de charge maximale à la pression interne normale.

2. Pneumatique (1) selon la revendication 1, dans lequel
une inclinaison de la rainure oblique (20, 21) par rapport à une direction de largeur du pneu est plus importante du côté de l'équateur (CL) que du côté de l'extrémité de contact au sol (E).

3. Pneumatique (1) selon la revendication 1 ou 2, dans lequel la pluralité de rainures obliques (20, 21) et la pluralité de blocs (100, 101) ont des formes planes qui sont courbées et convexes vers un côté arrière de la direction de rotation principale du pneu.
